# EUROPEAN PATENT SPECIFICATION

(11) **EP 2 377 722 B1**
(45) Date of publication and mention of the grant of the patent: **21.10.2015**
(21) Application number: 11162917.6
(22) Date of filing: 18.04.2011
(51) Int. Cl.: B60Q 1/26, B60Q 1/00, F21S 8/12

(54) **Rear lamp for vehicles**
Rücklicht für Fahrzeuge
Feu arrière pour véhicules

(30) Priority: 16.04.2010 IT TV20100066
(43) Date of publication of application: 19.10.2011
(73) Proprietor: Automotive Lighting Italia S.p.A., 10078 Venaria Reale (Torino) (IT)
(72) Inventor: Marcori, Franco, 33015 Moggio Udinese (IT); Rainis, Pietro, 33028 Tolmezzo (IT)
(74) Representative: Bergadano, Mirko

(56) References cited:
- EP-A2- 1 126 209
- DE-A1-102005 036 018
- DE-A1-102007 033 706
- DE-A1-102008 021 900
- FR-A1- 2 896 029
- US-A1- 2006 083 016

## Description

The present invention relates to a rear light for motor vehicles and the like.

More in detail, the present invention relates to a rear light for cars, use to which the following description refers purely by way of example without implying any loss of generality.

As is known, the car rear lights must be able to emit an intense red light when the brakes of the vehicle are applied, a white light when reverse gear is engaged, a yellow/orange light when the direction indicators are activated and, lastly, a red light to indicate the presence and size of the vehicle at night and, more in general, in poor ambient light conditions.

The first car rear lights were formed by a number of basic independent lamps, which were arranged side by side and structured to each emit a respective light signal. Each lamp consisted of a cup-shaped body with a more or less parabolic profile, which had a mirror-finished metalized inner surface so as to reflect incident light; of an incandescent light bulb located near to the bottom of the cup-shaped body, more or less at the centre of the cup-shaped body; and of a lenticular body in a coloured transparent or semitransparent plastic material, which covered the mouth of the cup-shaped body so that the light emitted by the light source passed through it. Obviously, the colour of the lamp's lenticular body varied in function of the type of light signal to be emitted.

Over the years a progressive integration of the rear light into the outer profile of the car's bodywork has been witnessed, and a simultaneous reduction in the number and size of the basic lamps that form the rear light, with the consequent integration of two or more functions into a single lamp.

In addition, new regulations have established that, barring a few exceptions, the light signals emitted by the car rear lights must originate from separate and distinct zones of the light's body, so as to be more easily and rapidly identifiable by the drivers of the motor vehicles that follow.

These constructional constraints have driven some manufacturers of car rear lights to position, around the lamp's lenticular body, an annular-shaped second light source that is powered in a completely separate and independent manner from the lamp's light bulb, so that it can generate a second light signal.

In the rear lights of more modern cars, the annular light source is formed by a number of light emitting diodes, commonly called LEDs, which are distributed along the entire outer annular rim of the cup-shaped body, at the side of the lenticular body, so as to encircle the mouth of the cup-shaped body; and by an annular protective frame in a transparent or semitransparent plastic material, which is placed to cover the LEDs and usually has a different colour from that of the lenticular body that it surrounds.

Unfortunately, although functioning very well, this solution has caused a significant increase in the production costs of lights, because the outer surface of the cup-shaped body must now be structured to firmly retain the annular board that supports and powers the ring of LEDs that surround the lamp's lenticular body. For this reason, the cup-shaped bodies of more modern rear lights are made of a superior and more expensive plastic, able to withstand the high temperatures reached by the LED mounting board when in function. Furthermore, the lamp's cup-shaped body must also be equipped with the necessary electrical wiring to take electricity to the board positioned next to the mouth of the cup-shaped body, with all the assembly problems that this entails.

Document EP 1 126 209 A2 discloses a rear light for motor vehicles according to the preamble of claim 1.

Aim of the present invention is that of making a car rear light that is devoid of the above-described drawbacks and that is also cheaper to produce.

In compliance with the above aims, according to the present invention there is provided a rear light for motor vehicles and the like as specified in claim 1 and preferably, though not necessarily, in any of its dependent claims.

A non-limiting embodiment of the present invention will now be described with reference to the accompanying drawings, in which:
- Figure 1 shows a partially-exploded axonometric view of a car rear light realized in accordance with the teachings of the present invention; and
- Figure 2 is a cross-sectional view of the light shown in Figure 1, with some parts removed for clarity; whereas
- Figure 3 is a cross-sectional view of a second embodiment of the light shown in Figure 1, with parts removed for clarity. With reference to Figures 1 and 2, reference numeral 1 indicates as a whole a rear light for motor vehicles and the like, which finds particularly advantageous application in present-day cars.

The rear light 1 comprises: at least one preferably, though not necessarily, parabolic profiled, concave cup-shaped body 2 having the inner surface 2i metalized or, in any case, mirror finished so as to reflect incident light; at least one light source 3 that is located close to the bottom of cup-shaped body 2, more or less at the centre of the latter, and is structured so as to emit light when electrically powered; and a front lenticular body 4 that is made of a transparent or semitransparent material, possibly even coloured, and is arranged so as to cover the mouth 2a of the cup-shaped body 2, so that the light emitted by the light source(s) 3 passes therethrough.

More in detail, the cup-shaped body 2 is provided with a central partitioning wall 2s that rises from the bottom of the cup-shaped body 2 substantially perpendicular to the latter, and extends towards the mouth 2a of the cup-shaped body 2, remaining substantially coplanar with the centre plane M of the cup-shaped body 2, so as to subdivide the space inside the cup-shaped body 2 into two complementary compartments that communicate with the outside through the mouth 2a, and the rear light 1 is equipped with two main light sources 3, which are located close to the bottom of the cup-shaped body 2, on opposite sides of the partitioning wall 2s, and are structured so as to emit light independently of one another when they are electrically powered.

In particular, in the example shown, the cup-shaped body 2 preferably, though not necessarily, has a substantially circular shaped cross-section and is preferably, though not necessarily, made of an opaque plastic material, with the inner surface 2i metalized with a mirror finishing so as to reflect incident light.

The two main light sources 3 are instead preferably, though not necessarily, formed by two incandescent light bulbs 5 or the like, which are removably fitted into a common light-bulb socket 6 that, in turn, is structured so as to be inserted/mortised in a rigid and stable, though easily releasable, manner within a specially provided through-hole 6a made in the bottom of the cup-shaped body 2, so as to make the two light bulbs 5 project inside the cup-shaped body 2, on opposite sides of the partitioning wall 2s.

The electrical circuits in the light-bulb socket 6 are structured so that is it possibly to switch on the two incandescent light bulbs 5 separately from each other.

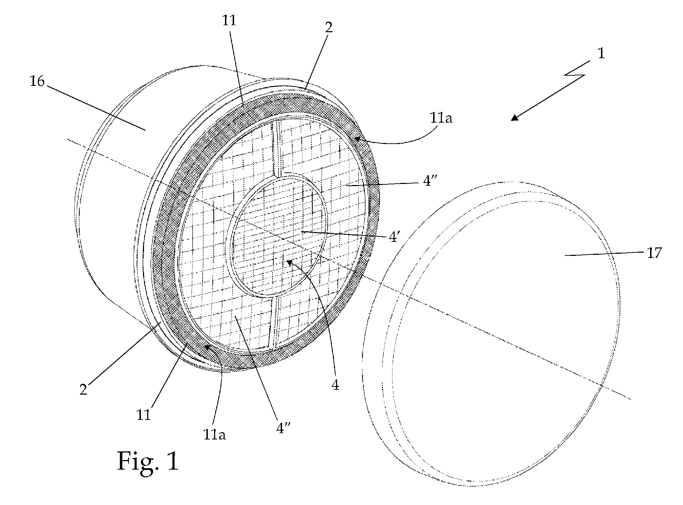

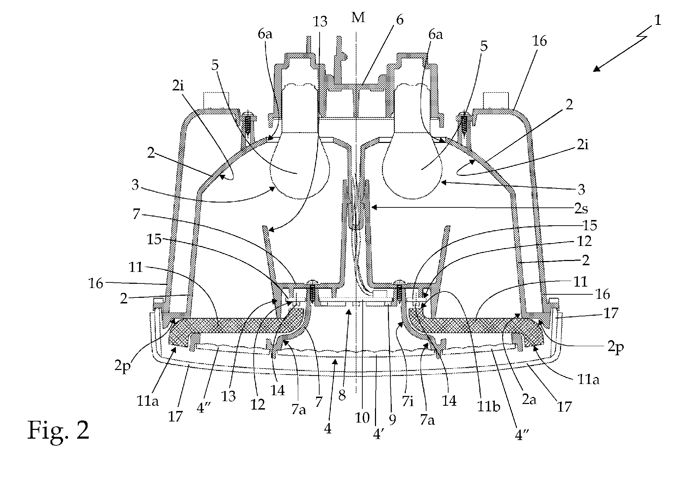

With reference to Figures 1 and 2, the rear light 1 is also equipped with a second cup-shaped body 7, which is rigidly fixed to the partitioning wall 2s, more or less at the centre of the cup-shaped body 2 and above the two main light sources 3, with the concavity facing the mouth 2a of the cup-shaped body 2, i.e. towards the central area of the lenticular body 4 immediately above, and an additional light source 8 that is positioned close to the bottom of the cup-shaped body 7, more or less at the centre of the latter, and also structured so as to emit light when electrically powered.

More in detail, the cup-shaped body 7 is fixed on the partitioning wall 2s so that its mouth 7a is located more or less at the centre of mouth 2a of cup-shaped body 2 and has its inner surface 7i preferably, though not necessarily, metalized or, in any case, mirror finished so as to reflect incident light; while light source 8 is formed by a plurality of light emitting diodes 9, commonly called LEDs, which are appropriately distributed on a disc-shaped supporting and power-supplying board 10 that, in turn, is fixed to the bottom of cup-shaped body 7, more or less at the centre of the latter, with the LEDs 9 facing mouth 7a.

Unlike currently known rear lights for motor vehicles, the rear light 1 is also equipped with a substantially funnel-shaped light-guiding sleeve 11, which is made of a photoconductive material and is fitted over the mouth 2a of the cup-shaped body 2, immediately below the lenticular body 4, so that the outer annular rim 11a of the sleeve 11 is arranged immediately above the peripheral rim 2p of the cup-shaped body 2 that delimits the mouth 2a and can completely surround the lenticular body 4, and so that the inner annular rim 11b of the sleeve 11 is fitted on the cup-shaped body 7, outside the latter; and a second additional light source 12, which is fixed to the cup-shaped body 7 so as to face the inner annular rim 11b of the sleeve 11, is structured so as to emit light when electricity powered, and is oriented so that the light emitted by the additional light source 12 penetrates within the sleeve 11 through the rim of the latter and propagates to the outer annular rim 11a.

More in detail, the light source 12 preferably, though not necessarily, has an annular shape and is fitted on the cup-shaped body 7, outside the latter, so that it is directly facing and preferably, though not necessarily, in contact with the inner annular rim 11b of the sleeve 11. In addition, the light source 12 is structured so that the light emitted by it penetrates within the sleeve 11 through the rim of the latter, propagates to the outer annular rim 11a due to the same physical principles that regulate the propagation of light inside fibre-optic cables, and finally comes out from the outer annular rim 11a of the sleeve 11.

In particular, in the example shown, the sleeve 11 has a substantially truncated-cone shape, is sized to completely cover the portion of the mouth 2a of the cup-shaped body 2 left free, and is preferably, though not necessarily, made of a transparent or semitransparent plastic material (such as polycarbonate or polymethyl methacrylate, for example), possibly even coloured; whereas the annular-shaped light source 12 is preferably, though not necessarily, housed within a protruding annular ledge 13 that projects from the side wall of the cup-shaped body 7, more or less close to the bottom of the cup-shaped body 7, and is shaped so as form a kind of annular gutter that has the cavity facing the mouth 2a of the cup-shaped body 2 and that also overhangs and partially covers the light sources 3.

More in detail, the annular ledge 13 is located within the cup-shaped body 2, outside of the cup-shaped body 7, and is shaped so as to form an auxiliary screening cover 13 that prevents the light emitted by the light sources 3 from reaching the inner annular rim 11b of sleeve 11, and from there to penetrate inside the body of the light-guiding sleeve 11 and then come out from the outer annular rim 11a of the same light-guiding sleeve 11.

With reference to Figure 2, in the example shown, in particular, the light source 12 comprises a series of light emitting diodes 14, traditionally called LEDs, which are appropriately distributed along the entire length of the inner annular rim 11b of the sleeve so that they are directly facing the rim of the light-guiding sleeve 11 and are oriented so that the light emitted by each LED 14 penetrates inside the sleeve 11 through the rim of the latter.

More in detail, the LEDs 14 of the light source 12 are positioned on a substantially annular shaped supporting and power-supplying board 15 that, in turn, is fixed to the bottom of the gutter formed by the annular ledge 13, so that the various LEDs 14 are facing the body of the sleeve 11, preferably, though not necessarily, in contact with the rim of the latter, and the optical axis of the light cone generated by each LED 14 is locally substantially perpendicular to the surface of the inner annular rim 11b, such that the light emitted by each LED 14 hits the rim of the sleeve 5 remaining locally substantially perpendicular to the surface of the sleeve 11.

More in detail, in the example shown, the supporting and power-supplying board 15 is fixed to the bottom of the annular ledge 13 preferably, though not necessarily, so as to be substantially coaxial and coplanar with the board 10 of the light source 8.

In the example shown, light source 12 is preferably, though not necessarily, also electrically connected to the light source 8 so as to be simultaneously switched on and off with the latter.

With reference to Figures 1 and 2, in the example shown, the lenticular body 4 is instead preferably, though not necessarily, subdivided into a disc-shaped central lens 4', which covers the mouth 7a of the cup-shaped body 7, so that only light emitted by the additional light source 8 passes therethrough; and two side lenses 4" with substantially the shape of a sector of a circular crown, which are placed to cover the two portions of the mouth 2a of the main cup-shaped body 2, corresponding to the two compartments defined by the partitioning wall 2s, so that only the light emitted by the two main light sources 3 passes therethrough.

Finally, in the example shown, the lenses 4' are 4" are preferably, though not necessarily, made of a transparent or semitransparent plastic material, preferably, though not necessarily, with mutually different colours. In addition, if the light sources 8 and 12 are powered in parallel, the sleeve 11 is made of a plastic material having substantially the same colour as the plastic material used to make the central lens 4'.

With reference to Figures 1 and 2, preferably, though not necessarily, the rear light 1 is equipped with a rigid outer casing or shell 16, which is provided with a central cavity shaped to house the cup-shaped body 2 and is preferably, though not necessarily, structured so that it can be firmly recessed in the rear part of the body of a car, and with a rigid cover 17 in a transparent material, which is placed to hermetically seal the rigid outer shell 16, immediately over the lenticular body 4 and the outer annular rim 11a of the sleeve 11, to cover and protect them.

The rigid outer shell 16 and the rigid cover 17 are both preferably, though not necessarily, made of a plastic material and are secured together in a rigid and fixed manner, preferably, though not necessarily, by means of a vibration welding process.

The functioning of the above-described rear light 1 is easily deducible from that written in the foregoing and therefore does not require further explanation. Other than for pointing out that the portion of the light-guiding sleeve 11 that obstructs the mouth 2a of the cup-shaped body 2 does not impede the propagation of light to the two side lenses 4" immediately above, because the light produced by the light sources 3 intersects the body of the sleeve 11 with an angle of incidence below the critical angle and more or less equal to 0 degrees.

Furthermore, given that the angle of incidence of the light produced by the light sources 3 on the surface of the lenticular body 4 is always less than the critical angle, the light produced by the light sources 3 cannot remain trapped inside light-guiding sleeve 11 and propagate inside the body of said light-guiding sleeve 11 to the outer annular rim 11a.

In addition to that specified above, the presence of the auxiliary screening cover 13, i.e. of the annular ledge 13, prevents the light emitted by the two light sources 3 from reaching the inner annular rim 11b of the sleeve 11, and from there to penetrate inside the body of the light-guiding sleeve 11 and then propagate inside the body of the sleeve 11 to the outer annular rim 11a.

In other words, the light rays coming from the two main light sources 3 are locally substantially orthogonal to the surface of the substantially funnel-shaped sleeve 11 and are therefore able to completely pass through the sleeve 11 without being deviated or guided to the outer annular rim 11a of the sleeve.

In this way, the rear light 1 is able to emit, by choice, light signals with three or four different colours, whilst having the equivalent bulk of a single conventional basic lamp.

The advantages associated with the particular structure of the rear light 1 are numerous.

First of all, the board 15 of light source 12 is now fixed on cup-shaped body 7, which is already structured to support the board 18 of light source 8, consequently enabling cup-shaped body 2 to be made using less expensive plastic material. In addition, light source 6 is now located in the immediate vicinity of light source 8, gathering the electrical wiring together inside the partitioning wall 2s of the cup-shaped body 2. A repositioning that results in a reduction in production costs for the light.

In addition, given that the light emitted by light sources 3 cannot come out from the outer annular rim 11a of the light-guiding sleeve 11, the emission area of the light signal generated by light sources 3 remains completely separate and distinct from the emission area of the light signal generated by light source 12, considerably improving the visual perception of the two light signals.

Furthermore, the intensity of the light coming from the outer annular rim 11a of the sleeve 11 is substantially uniform along the entire perimeter of the lenticular body 4, making the light signal leaving the sleeve 11 qualitatively better than that obtained by positioning a ring of LEDs directly on the mouth of the cup-shaped body 2.

Lastly, the powering in parallel of light sources 8 and 12 enables the simultaneous lighting of two different and concentric portions of the rear light 1, obtaining a light signal different from that achievable from any other currently known type of rear light for cars.

Finally, it is understood that changes or modifications may be made to the car rear light 1 described and illustrated herein without departing from the scope of the present invention.

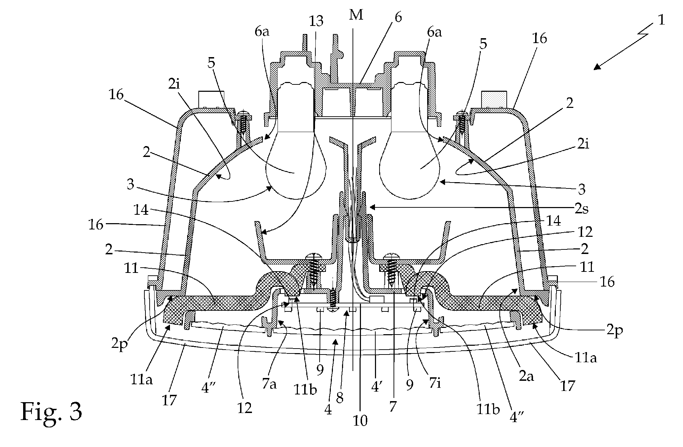

For example, with reference to the embodiment shown in Figure 3, the LEDs 14 of light source 12 can be arranged on the rear face of the board 10 of the light source 8, facing one or more openings made in the bottom of the cup-shaped body 7 close to the outer edge, while the inner annular rim 11b of sleeve 11 is essentially bent in a C-shape towards the bottom of the cup-shaped body 7, so that it penetrates within the cup-shaped body 7 through the through holes made in the bottom of the latter, placing itself in contact with the LEDs 14 of the light source 12.

In other words, light source 12 is located on the bottom of the cup-shaped body 7, beneath light source 8, facing a series of through holes made in the bottom of the cup-shaped body 7. This solution is structurally advantageous when the light sources 8 and 12 must be switched on and off simultaneously and can therefore be integrated in single light source.

Also in this embodiment, the rear light 1 is provided with an auxiliary screening cover 13 that is housed within cup-shaped body 2, outside of cup-shaped body 7, and is shaped to prevent the light emitted by the light sources 3 from reaching the inner annular rim 11b of the light-guiding sleeve 11, and from there to penetrate inside the body of the sleeve 11 and then come out from the outer annular rim 11a.

In other words, the rear light 1 is provided with a protruding annular ledge 13 with a substantially umbrella-like shape, which extends beneath the bottom of cup-shaped body 7 and the inner annular rim 11b of the light-guiding sleeve 11, so as to overhang and partially cover light sources 3 in order to prevent the light emitted by light sources 3 from reaching and penetrating inside the body of the sleeve 11 through the inner annular rim 11b.

Furthermore, in a more sophisticated not-shown embodiment even the two main light sources 3 can be formed by two sets of light emitting diodes, commonly called LEDs, which are appropriately distributed on a single preferable, though not necessarily, disc-shaped, supporting and power-supplying board which is fixed to the bottom of the cup-shaped body 2, closing the through hole 6a, in place of the light-bulb socket 6.

Obviously, the two sets of LEDs are facing the inside of the cup-shaped body 2 and are arranged on opposite sides of the partitioning wall 2s.

## Claims

1. A rear light (1) for motor vehicles comprising: a first cup-shaped body (2) which has the inner surface (2i) mirror finished so as to reflect the incident light; - at least one main light source (3) which is located close to the bottom of said first cup-shaped body (2), and is structured so as to emit light when electrically powered; and a front lenticular body (4) which is made of transparent or semitransparent material, and is arranged so as to cover the mouth (2a) of said first cup-shaped body (2), so that the light emitted by said at least one main light source (3) passes therethrough;
the rear light (1) further comprising:
- a second cup-shaped body (7) which is rigidly fixed within the first cup-shaped body (2), above said at least one main light source (3), with its concavity facing the lenticular body (4); and
- a first additional light source (8) which is arranged close to the bottom of the second cup-shaped body (7) and is structured so as to emit light when electrically powered;
**characterised by** also comprising:
- a substantially funnel-shaped light-guiding sleeve (11) which is made of photoconductive material and is fitted on the mouth (2a) of the first cup-shaped body (2), underneath the lenticular body (4), so that the inner annular rim (11b) of the same funnel-shaped light-guiding sleeve (11) is fitted on the second cup-shaped body (7), outside the latter, and so that the outer annular rim (11a) of the same funnel-shaped light-guiding sleeve (11) is arranged above the peripheral rim (2p) of the first cup-shaped body (2) and completely surrounds the lenticular body (4); and
- a second additional light source (12) which is fixed on the second cup-shaped body (7) so as to face the inner annular rim (11b) of the funnel-shaped light-guiding sleeve (11), is structured so as to emit light when electricity powered, and is oriented so that the light emitted by the second additional light source penetrates within the light-guiding sleeve (11) through the inner annular rim (11b) and propagates to the outer annular rim (11a) of the same light-guiding sleeve (11).

2. Rear light according to Claim 1, **characterized by** also comprising an auxiliary screening cover (13) that is located inside the first cup-shaped body (2) and is shaped so as to prevent the light emitted by said at least one main light source (3) from reaching the inner annular rim (11b) of the sleeve, and from there to penetrate inside the body of the light-guiding sleeve (11) and then come out from the outer annular rim (11a) of said light-guiding sleeve (11).

3. Rear light according to Claim 1 or 2, **characterized in that** the second additional light source (12) has a substantially annular shape.

4. Rear light according to Claim 3, **characterized in that** the second additional light source (12) is fitted on the second cup-shaped body (7), outside the latter, so as to directly face the inner annular rim (11b) of the light-guiding sleeve (11).

5. Rear light according to Claim 4, **characterized in that** the second cup-shaped body (7) is provided with an outer annular seat (13) able to house the second additional light source (12).

6. Rear light according to Claim 5, **characterized in that** the outer annular seat (13) able to house the second additional light source (12) is integrated in said auxiliary screening cover (13).

7. Rear light according to Claim 1, 2 or 3, **characterized in that** the second additional light source (12) is located on the bottom of the second cup-shaped body (7), underneath the first additional light source (8), and **in that** the inner annular rim (11b) of the light-guiding sleeve (11) is shaped so as to penetrate within the second cup-shaped body (7) in order to face to the second additional light source (12).

8. Rear light according to any one of the preceding claims, **characterized in that** the second additional light source (12) comprises a series of light emitting diodes (14), which are appropriately distributed along the inner annular rim (11b) of the sleeve so as to be directly facing the rim of the light-guiding sleeve (11), and are oriented so that the light emitted by each diode (14) penetrates within the light-guiding sleeve (11) through the rim of the latter.

9. Rear light according to any one of the preceding claims, **characterized in that** the second cup-shaped body (7) is fixed on the first cup-shaped body (2) so that the mouth (7a) of the second cup-shaped body (7) is positioned more or less at the centre of the mouth (2a) of the first cup-shaped body (2).

10. Rear light according to any one of the preceding claims, **characterized in that** the cup-shaped body (2) is provided with a central partitioning wall (2s) that extends from the bottom of the first cup-shaped body (2) towards the mouth (2a) of the latter, dividing the space within the first cup-shaped body (2) into two complementary compartments, and **in that** the second cup-shaped body (7) is rigidly fixed on the partitioning wall (2s), within the first cup-shaped body (2), immediately below the lenticular body (4).

11. Rear light according to Claim 10, **characterized by** comprising two main light sources (3) which are located close to the bottom of the first cup-shaped body (2), on opposite sides of the partitioning wall (2s), and are structured so as to emit light independently of one another, when they are electrically powered.

12. Rear light according to any one of the preceding claims, **characterized in that** the first additional light source (8) comprises a plurality of light emitting diodes (9), which are appropriately distributed on a supporting and power-supplying board (10) that, in turn, is fixed to the bottom of the second cup-shaped body (7), with the diodes (9) facing the mouth (7a) of the second cup-shaped body (11).

13. Rear light according to any one of the preceding claims, **characterized in that** the second additional light source (12) is structured so as to switch on and off simultaneously with the first additional light source (6).

14. Rear light according to any one of the preceding claims, **characterized in that** the front lenticular body (4) comprises a central lens (4') that closes the mouth (7a) of the second cup-shaped body (7) so to be crossed only by the light emitted by said first additional light source (8).

15. Rear light according to Claims 11 and 14, **characterized in that** the front lenticular body (4) also comprises two side lenses (4") with substantially the shape of a sector of a circular crown, which are placed to cover the two portions of the mouth (2a) of the first cup-shaped body (2) corresponding to the two compartments defined by said partitioning wall (2s), so that each side lens (4") is crossed only by the light emitted by a corresponding main light source (3).

## Patentansprüche

1. Rücklicht (1) für Kraftfahrzeuge, aufweisend: einen ersten napfförmigen Körper (2), dessen innere Oberfläche (2i) hochglanzpoliert ist, um das einfallende Licht zu reflektieren; mindestens eine Hauptlichtquelle (3), die sich nahe der Unterseite des ersten napfförmigen Körpers (2) befindet und so strukturiert ist, dass sie Licht aussendet, wenn ihr elektrische Energie zugeführt wird; und einen vorderen linsenförmigen Körper (4), der aus transparentem oder halbtransparentem Material hergestellt ist und so angeordnet ist, dass er die Mündung (2a) des ersten napfförmigen Körpers (2) bedeckt, sodass das von der mindestens einen Hauptlichtquelle (3) ausgesendete Licht dort hindurchtritt;
wobei das Rücklicht (1) ferner aufweist:
- einen zweiten napfförmigen Körper (7), der innerhalb des ersten napfförmigen Körpers (2), oberhalb der mindestens einen Hauptlichtquelle (3), starr befestigt ist, wobei seine Höhlung dem linsenförmigen Körper (4) zugewandt ist; und
- eine erste zusätzliche Lichtquelle (8), die nahe der Unterseite des zweiten napfförmigen Körpers (7) angeordnet und so strukturiert ist, dass sie Licht aussendet, wenn ihr elektrische Energie zugeführt wird;
**dadurch gekennzeichnet, dass** sie auch aufweist:
- eine im Wesentlichen trichterförmige, Licht leitende Hülse (11), die aus fotoleitendem Material hergestellt ist und auf der Mündung (2a) des ersten napfförmigen Körpers (2), unterhalb des linsenförmigen Körpers (4), angebracht ist, sodass der innere ringförmige Kranz (11b) derselben trichterförmigen, Licht leitenden Hülse (11) auf dem zweiten napfförmigen Körper (7), außerhalb des Letzteren, angebracht ist und sodass der äußere ringförmige Kranz (11a) derselben trichterförmigen, Licht leitenden Hülse (11) oberhalb des umlaufenden Kranzes (2p) des ersten napfförmigen Körpers (2) angeordnet ist und den linsenförmigen Körper (4) vollständig umgibt; und
- eine zweite zusätzliche Lichtquelle (12), die auf dem zweiten napfförmigen Körper (7) befestigt ist, um dem inneren ringförmigen Kranz (11b) der trichterförmigen, Licht leitenden Hülse (11) zugewandt zu sein, so strukturiert ist, dass sie Licht aussendet, wenn ihr elektrische Energie zugeführt wird, und so ausgerichtet ist, dass das von der zweiten zusätzlichen Lichtquelle ausgesendete Licht innerhalb der Licht leitenden Hülse (11) durch den inneren ringförmigen Kranz (11b) dringt und sich zum äußeren ringförmigen Kranz (11a) derselben Licht leitenden Hülse (11) ausbreitet.

2. Rücklicht nach Anspruch 1, **dadurch gekennzeichnet, dass** es auch eine Hilfsabschirmung (13) aufweist, die sich innerhalb des ersten napfförmigen Körpers (2) befindet und so geformt ist, dass sie verhindert, dass das von der mindestens einen Hauptlichtquelle (3) ausgesendete Licht den inneren ringförmigen Kranz (11b) der Hülse erreicht und von dort innerhalb des Körpers der Licht leitenden Hülse (11) dringt und dann aus dem äußeren ringförmigen Kranz (11a) der Licht leitenden Hülse (11) austritt.

3. Rücklicht nach Anspruch 1 oder 2, **dadurch gekennzeichnet, dass** die zweite zusätzliche Lichtquelle (12) im Wesentlichen ringförmig ist.

4. Rücklicht nach Anspruch 3, **dadurch gekennzeichnet, dass** die zweite zusätzliche Lichtquelle (12) auf dem zweiten napfförmigen Körper (7), außerhalb des Letzteren, so angebracht ist, dass sie dem inneren ringförmigen Kranz (11b) der Licht leitenden Hülse (11) direkt zugewandt ist.

5. Rücklicht nach Anspruch 4, **dadurch gekennzeichnet, dass** der zweite napfförmige Körper (7) mit einem äußeren ringförmigen Sitz (13), der fähig ist, die zweite zusätzliche Lichtquelle (12) aufzunehmen, versehen ist.

6. Rücklicht nach Anspruch 5, **dadurch gekennzeichnet, dass** der äußere ringförmige Sitz (13), der fähig ist, die zweite zusätzliche Lichtquelle (12) aufzunehmen, in die Hilfsabschirmung (13) integriert ist.

7. Rücklicht nach Anspruch 1, 2 oder 3, **dadurch gekennzeichnet, dass** die zweite zusätzliche Lichtquelle (12) sich an der Unterseite des zweiten napfförmigen Körpers (7), unterhalb der ersten zusätzlichen Lichtquelle (8), befindet, und dadurch, dass der innere ringförmige Kranz (11b) der Licht leitenden Hülse (11) so geformt ist, dass er innerhalb des zweiten napfförmigen Körpers (7) dringt, um der zweiten zusätzlichen Lichtquelle (12) zugewandt zu sein.

8. Rücklicht nach einem der vorangegangenen Ansprüche, **dadurch gekennzeichnet, dass** die zweite zusätzliche Lichtquelle (12) eine Reihe von Leuchtdioden (14) aufweist, die in geeigneter Weise entlang dem inneren ringförmigen Kranz (11b) der Hülse verteilt sind, sodass sie dem Kranz der Licht leitenden Hülse (11) direkt zugewandt sind, und so ausgerichtet sind, dass das von jeder Diode (14) ausgesendete Licht innerhalb der Licht leitenden Hülse (11) durch den Kranz der Letzteren dringt.

9. Rücklicht nach einem der vorangegangenen Ansprüche, **dadurch gekennzeichnet, dass** der zweite napfförmige Körper (7) so am ersten napfförmigen Körper (2) befestigt ist, dass die Mündung (7a) des zweiten napfförmigen Körpers (7) mehr oder weniger in der Mitte der Mündung (2a) des ersten napfförmigen Körpers (2) angeordnet ist.

10. Rücklicht nach einem der vorangegangenen Ansprüche, **dadurch gekennzeichnet, dass** der napfförmige Körper (2) mit einer mittigen Trennwand (2s) versehen ist, die sich von der Unterseite des ersten napfförmigen Körpers (2) in Richtung der Mündung (2a) des Letzteren erstreckt, wobei sie den Raum innerhalb des ersten napfförmigen Körpers (2) in zwei komplementäre Abteile unterteilt, und dadurch, dass der zweite napfförmige Körper (7) an der Trennwand (2s), innerhalb des ersten napfförmigen Körpers (2), unmittelbar unter dem linsenförmigen Körper (4) starr befestigt ist.

11. Rücklicht nach Anspruch 10, **dadurch gekennzeichnet, dass** es zwei Hauptlichtquellen (3) aufweist, die sich nahe der Unterseite des ersten napfförmigen Körpers (2), an gegenüberliegenden Seiten der Trennwand (2s), befinden und so strukturiert sind, dass sie unabhängig voneinander Licht aussenden, wenn ihnen elektrische Energie zugeführt wird.

12. Rücklicht nach einem der vorangegangenen Ansprüche, **dadurch gekennzeichnet, dass** die erste zusätzliche Lichtquelle (8) eine Vielzahl von Leuchtdioden (9) aufweist, die in geeigneter Weise auf einer stützenden und Energie zuführenden Platte (10), die ihrerseits an der Unterseite des zweiten napfförmigen Körpers (7) befestigt ist, verteilt sind, wobei die Dioden (9) der Mündung (7a) des zweiten napfförmigen Körpers (11) zugewandt sind.

13. Rücklicht nach einem der vorangegangenen Ansprüche, **dadurch gekennzeichnet, dass** die zweite zusätzliche Lichtquelle (12) so strukturiert ist, dass sie gleichzeitig mit der ersten zusätzlichen Lichtquelle (6) ein- und ausschaltet.

14. Rücklicht nach einem der vorangegangenen Ansprüche, **dadurch gekennzeichnet, dass** der vordere linsenförmige Körper (4) eine mittige Linse (4') aufweist, die die Mündung (7a) des zweiten napfförmigen Körpers (7) so schließt, dass sie nur von dem von der ersten zusätzlichen Lichtquelle (8) ausgesendeten Licht gekreuzt wird.

15. Rücklicht nach den Ansprüchen 11 und 14, **dadurch gekennzeichnet, dass** der vordere linsenförmige Körper (4) auch zwei Seitenlinsen (4") mit im Wesentlichen der Form eines Sektors einer kreisförmigen Krone aufweist, die angeordnet sind, um die zwei Abschnitte der Mündung (2a) des ersten napfförmigen Körpers (2) entsprechend den zwei durch die Trennwand (2s) festgelegten Abteilen so zu bedecken, dass jede Seitenlinse (4") nur von dem von einer entsprechenden Hauptlichtquelle (3) ausgesendeten Licht gekreuzt wird.

## Revendications

1. Feu arrière (1) pour des véhicules à moteur comprenant : un premier corps en forme de coupelle (2) dont la surface intérieure (2i) présente une finition miroir de sorte à réfléchir la lumière incidente ; au moins une source de lumière principale (3) qui est située près du fond dudit premier corps en forme de coupelle (2) et est structurée de sorte à émettre de la lumière lorsqu'elle est sous tension électrique ; et un corps lenticulaire avant (4) qui est en matériau transparent ou semi-transparent, et est agencé de sorte à couvrir l'ouverture (2a) dudit premier corps en forme de coupelle (2) de sorte que la lumière émise par ladite au moins une source de lumière principale (3) passe au travers ;
le feu arrière (1) comprenant en outre :
- un second corps en forme de coupelle (7) qui est rigidement fixé à l'intérieur du premier corps en forme de coupelle (2) au-dessus de ladite au moins une source de lumière principale (3), sa concavité faisant face au corps lenticulaire (4) ; et
- une première source de lumière supplémentaire (8) qui est agencée près du fond du second corps en forme de coupelle (7) et est structurée de sorte à émettre de la lumière lorsqu'elle est sous tension électrique ;
**caractérisé en ce qu'**il comprend aussi :
- un manchon (11) de guidage de lumière sensiblement en forme d'entonnoir qui est fait de matériau photoconducteur et est monté sur l'ouverture (2a) du premier corps en forme de coupelle (2) sous le corps lenticulaire (4) de sorte que le bord annulaire intérieur (11b) du même manchon de guidage de lumière en forme d'entonnoir (11) soit monté sur le second corps en forme de coupelle (7) en dehors de ce dernier, et de sorte que le bord annulaire extérieur (11a) du même manchon de guidage de lumière en forme d'entonnoir (11) soit agencé au-dessus du bord périphérique (2p) du premier corps en forme de coupelle (2) et entoure complètement le corps lenticulaire (4) ; et
- une seconde source de lumière supplémentaire (12) qui est fixée sur le second corps en forme de coupelle (7) de sorte à faire face au bord annulaire intérieur (11b) du manchon de guidage de lumière en forme d'entonnoir (11), est structurée de sorte à émettre de la lumière lorsqu'elle est sous tension électrique, et est orientée de sorte que la lumière émise par la seconde source de lumière supplémentaire pénètre à l'intérieur du manchon de guidage de lumière (11) par le bord annulaire intérieur (11b) et se propage au bord annulaire extérieur (11a) du même manchon de guidage de lumière (11).

2. Feu arrière selon la revendication 1, **caractérisé en ce qu'**il comprend aussi un couvercle de tamisage auxiliaire (13) qui est situé dans le premier corps en forme de coupelle (2) et est formé de sorte à empêcher la lumière émise par ladite au moins une source de lumière principale (3) d'atteindre le bord annulaire intérieur (11b) du manchon, et de là de pénétrer à l'intérieur du corps du manchon de guidage de lumière (11) et de sortir ensuite du bord annulaire extérieur (11a) dudit manchon de guidage de lumière (11).

3. Feu arrière selon la revendication 1 ou 2, **caractérisé en ce que** la seconde source de lumière supplémentaire (12) présente une forme sensiblement annulaire.

4. Feu arrière selon la revendication 3, **caractérisé en ce que** la seconde source de lumière supplémentaire (12) est montée sur le second corps en forme de coupelle (7) à l'extérieur de ce dernier de sorte à faire face directement au bord annulaire intérieur (11b) du manchon de guidage de lumière (11).

5. Feu arrière selon la revendication 4, **caractérisé en ce que** le second corps en forme de coupelle (7) est doté d'un siège annulaire extérieur (13) capable de loger la seconde source de lumière supplémentaire (12).

6. Feu arrière selon la revendication 5, **caractérisé en ce que** le siège annulaire extérieur (13) capable de loger la seconde source de lumière supplémentaire (12) est intégré dans ledit couvercle de tamisage auxiliaire (13).

7. Feu arrière selon la revendication 1, 2 ou 3, **caractérisé en ce que** la seconde source de lumière supplémentaire (12) est située sur le fond du second corps en forme de coupelle (7) sous la première source de lumière supplémentaire (8) et **en ce que** le bord annulaire intérieur (11b) du manchon de guidage de lumière (11) est formé de sorte à pénétrer à l'intérieur du second corps en forme de coupelle (7) dans le but de faire face à la seconde source de lumière supplémentaire (12).

8. Feu arrière selon l'une quelconque des revendications précédentes, **caractérisé en ce que** la seconde source de lumière supplémentaire (12) comprend une série de diodes électroluminescentes (14) qui sont distribuées de manière appropriée le long du bord annulaire intérieur (11b) du manchon de sorte à faire face directement au bord du manchon de guidage de lumière (11), et sont orientées de sorte que la lumière émise par chaque diode (14) pénètre à l'intérieur du manchon de guidage de lumière (11) par le bord de ce dernier.

9. Feu arrière selon l'une quelconque des revendications précédentes, **caractérisé en ce que** le second corps en forme de coupelle (7) est fixé sur le premier corps en forme de coupelle (2) de sorte que l'ouverture (7a) du second corps en forme de coupelle (7) soit positionnée plus ou moins au centre de l'ouverture (2a) du premier corps en forme de coupelle (2).

10. Feu arrière selon l'une quelconque des revendications précédentes, **caractérisé en ce que** le corps en forme de coupelle (2) est doté d'une paroi de séparation centrale (2s) qui s'étend du fond du premier corps en forme de coupelle (2) vers l'ouverture (2a) de ce dernier, divisant l'espace à l'intérieur du premier corps en forme de coupelle (2) en deux compartiments complémentaires, et **en ce que** le second corps en forme de coupelle (7) est rigidement fixé sur la paroi de séparation (2s) à l'intérieur du premier corps en forme de coupelle (2) immédiatement sous le corps lenticulaire (4).

11. Feu arrière selon la revendication 10, **caractérisé en ce qu'**il comprend deux sources de lumière (3) principales qui sont situées près du fond du premier corps en forme de coupelle (2) sur des côtés opposés de la paroi de séparation (2s) et sont structurées de sorte à émettre de la lumière indépendamment l'une de l'autre lorsqu'elles sont sous tension électrique.

12. Feu arrière selon l'une quelconque des revendications précédentes, **caractérisé en ce que** la première source de lumière supplémentaire (8) comprend une pluralité de diodes électroluminescentes (9) qui sont distribuées de manière appropriée sur une plaque de support et d'alimentation électrique (10) qui est fixée à son tour au fond du second corps en forme de coupelle (7), les diodes (9) faisant face à l'ouverture (7a) du second corps en forme de coupelle (11).

13. Feu arrière selon l'une quelconque des revendications précédentes, **caractérisé en ce que** la seconde source de lumière supplémentaire (12) est structurée de sorte à s'allumer et s'éteindre simultanément à la première source de lumière supplémentaire (6).

14. Feu arrière selon l'une quelconque des revendications précédentes, **caractérisé en ce que** le corps lenticulaire avant (4) comprend une lentille centrale (4') qui ferme l'ouverture (7a) du second corps en forme de coupelle (7) de sorte à être traversée seulement par la lumière émise par ladite première source de lumière supplémentaire (8).

15. Feu arrière selon les revendications 11 et 14, **caractérisé en ce que** le corps lenticulaire avant (4) comprend aussi deux lentilles latérales (4") avec sensiblement la forme d'un secteur d'une couronne circulaire, qui sont placées pour couvrir les deux parties de l'ouverture (2a) du premier corps en forme de coupelle (2) correspondant aux deux compartiments définis par ladite paroi de séparation (2s) de sorte que chaque lentille latérale (4") soit traversée seulement par la lumière émise par une source de lumière principale correspondante (3).
